# FASCICULE DE BREVET EUROPEEN

(11) **EP 2 595 904 B1**
(45) Date de publication et mention de la délivrance du brevet: **18.05.2016**
(21) Numéro de dépôt: 11730655.5
(22) Date de dépôt: 07.07.2011
(51) Int. Cl.: B65F 1/00

(54) **MACHINE DE COLLECTE ET DE TRI DES DECHETS**
MASCHINE ZUM SAMMELN UND SORTIEREN VON ABFÄLLEN
MACHINE FOR COLLECTING AND SORTING WASTE

(30) Priorité: 19.07.2010 FR 1055872
(43) Date de publication de la demande: 29.05.2013
(73) Titulaire: Canibal, 92631 Gennevilliers Cedex (FR)
(72) Inventeur: MARRAPODI, Stéphane, F-75116 Paris (FR); PAGET, Benoît, F-75016 Paris (FR)
(74) Mandataire: Parzy, Benjamin Alain
(86) Numéro de dépôt international: PCT/EP2011/061541
(87) Numéro de publication internationale: WO 2012/010434

(56) Documents cités:
- EP-A1- 0 684 191
- WO-A1-99/43579
- WO-A1-2006/089990
- BE-A3- 1 009 279

## Description

### ARRIERE-PLAN DE L'INVENTION

La présente invention concerne une machine de collecte et de tri de déchets et plus particulièrement une machine de faible encombrement, permettant de collecter un volume important de déchets.

Dans une démarche écologique et citoyenne, le recyclage des déchets ménager est devenu une pratique courante. En revanche, il est plus difficile de recycler des déchets en dehors du domicile, car la collecte de ces déchets nécessite alors une infrastructure importante.

Ainsi, il est particulièrement difficile de collecter et de trier les déchets issus des machines distribuant des boissons chaudes ou froides. En effet, ces machines délivrent différents types de boissons dont il faut trier, stocker et recycler le contenant sélectivement. Cela nécessite des conteneurs à déchets spécifiques à chaque déchet, des moyens de collecte proche des distributeurs et un ramassage régulier. La collecte des déchets issus des distributeurs automatiques est donc plus difficile que la collecte des déchets ménagers.

Les cannettes métalliques, les bouteilles en plastique et les gobelets en plastique sont les contenants les plus communément utilisés dans les distributeurs automatiques. Il est ainsi connu des dispositifs permettant de trier et de stocker des déchets de ce type. Notamment, le document FR2829950 décrit une machine de compactage et de tri automatique des déchets. Cette machine comporte un arbre de compression permettant de compacter et de déplacer les déchets et des capteurs permettant de détecter le type de déchets (acier, aluminium ou plastique) ainsi que des moyens permettant de diriger les déchets vers des conteneurs correspondants.

Une telle machine occupe toutefois une surface au sol importante. Elle se place donc difficilement dans des espaces confinés telle des aires de détente.

On connaît également, du document BE -A-1009279, une machine de collecte et de tri de déchets selon le préamble de la revendication 1, comprenant un élévateur de transport du déchet introduit et déplaçant celui-ci à l'aplomb d'un conteneur correspondant au déchet. Le conteneur est sélectionné après identification du type de déchet fourni par des moyens de reconnaissance du déchet. Cependant cette machine n'est adaptée que pour le tri de deux types de déchets.

### OBJET DE L'INVENTION

Le but de l'invention est de proposer une machine permettant de résoudre au moins en partie les inconvénients précédents.

### BREVE DESCRIPTION DE L'INVENTION

A cet effet, on propose une machine de collecte et de tri de déchets comprenant un bâti avec une base reposant sur le sol et une face avant dans laquelle est pratiquée une ouverture permettant d'accéder à une zone d'introduction des déchets, la machine comportant en outre à l'intérieur du bâti, des moyens de reconnaissance des déchets, un trieur de déchets et des moyens de stockage des déchets triés comprenant au moins deux conteneurs. La machine comportant un élévateur pour transporter un déchet introduit dans la zone d'introduction vers le trieur disposé à l'aplomb de la zone d'introduction et le trieur de déchets étant agencé pour déplacer le déchet transporté à l'aplomb d'un conteneur choisi en fonction d'une information fournie par les moyens de reconnaissance des déchets et dans lequel le déchet est reçu. Selon l'invention, le trieur comporte un plateau de transfert fixe, comprenant un orifice permettant à la plateforme d'amener le déchet à hauteur du plateau de transfert dans une première position, et des moyens de déplacement pour déplacer le déchet sur le plateau de transfert entre la première position et au moins deux positions distinctes dans lesquelles le déchet est amené au-delà d'une extrémité du plateau de transfert à l'aplomb du conteneur correspondant.

Grâce à l'élévateur, les moyens de stockage peuvent être agencés selon une disposition verticale, ce qui permet de minimiser la surface au sol de la machine.

Avantageusement, les moyens de stockage des déchets comprennent une trappe individuelle pour chaque conteneur, séparant le conteneur d'une zone de stockage temporaire située au dessus de la trappe.

Ainsi, le stockage des déchets n'est pas limité à la seule capacité des conteneurs et le remplissage d'un des conteneurs n'empêche pas la machine de fonctionner. En effet, si le conteneur est rempli, il suffit de fermer la trappe de sorte que les déchets s'empilent par dessus la trappe fermée dans la zone de stockage temporaire correspondante. Le conteneur peut alors être enlevé et remplacé par un autre conteneur. La trappe est alors ouverte et les déchets tombés sur la trappe sont alors recueillis dans le nouveau conteneur.

### BREVE DESCRIPTION DES DESSINS

L'invention sera mieux comprise à la lumière de la description et en référence aux figures annexées et données à titre d'exemple non limitatif parmi lesquels :
- la figure 1 illustre une vue en perspective d'une machine selon l'invention ;
- la figure 2 illustre une vue analogue à celle de la figure 1, la face avant ayant été ôtée ;
- la figure 2a est une vue schématique de dessus de la machine, montrant l'agencement des conteneurs de réception des déchets ;
- la figure 3 illustre une vue de détail de l'élévateur visible en figure 2 ;
- les figures 4 et 5 illustrent respectivement une vue de détail en perspective et une vue de dessus du trieur visible en figure 2 ;
- les figures 6 et 7 illustrent respectivement des vues de détail en perspective et de côté de la zone d'introduction visible en figure 2 ;
- les figures 8 et 9 sont respectivement des organigrammes de fonctionnement de la machine illustrée dans les figures 1 à 7 ;
- la figure 10 illustre une vue de côté en coupe d'une butée de compactage visible dans les figures 2 et 3.

### DESCRIPTION DETAILLEE DE L'INVENTION

L'idée à la base de l'invention est de réaliser une machine dont les composants sont placés verticalement les uns au-dessus des autres afin de réduire la surface au sol occupée par la machine.

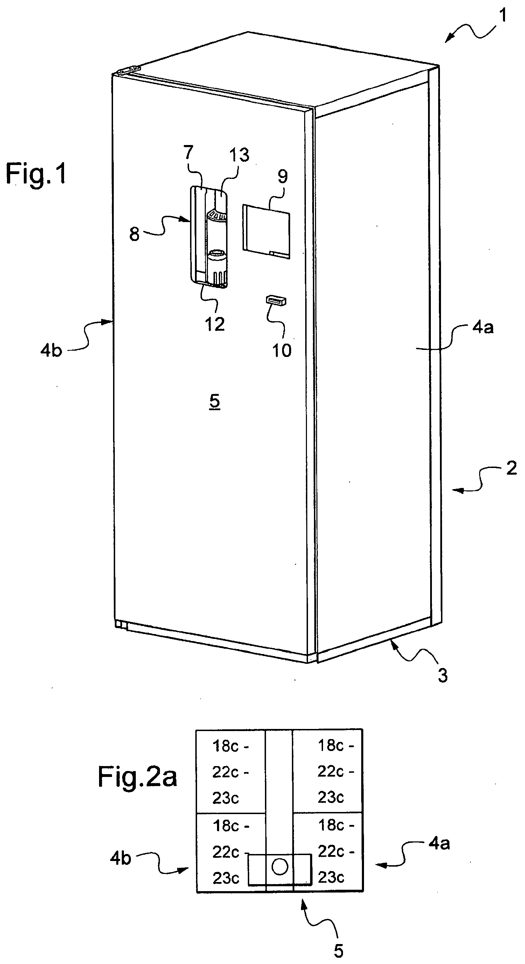

En référence à la figure 1, la machine 1 comporte un bâti 2 parallélépipédique. Le bâti 2 repose sur une base 3 présentant une faible surface au sol. Le bâti 2 comporte en outre des faces latérales 4a et 4b, une face arrière (non visible) et une face avant 5 qui comporte une ouverture 7 donnant accès à la zone d'introduction des déchets 8. La face avant 5 comporte un écran 9 digital délivrant des informations à l'utilisateur et une imprimante 10 délivrant des récompenses, ici des bons primes. Avantageusement, la face avant 5 forme une porte pivotante permettant d'accéder à l'intérieur de la machine 1. L'ouverture 7 est fermée par une trappe coulissante (non représentée) actionnée par l'utilisateur. Sur la figure, on distingue à l'intérieur de la zone d'introduction 8 des déchets une cannette.

Le dispositif illustré ici est prévu pour trier trois types de déchets : cannettes métalliques, bouteille en polyéthylène téréphtalate de 50 centilitres et gobelets en plastique.

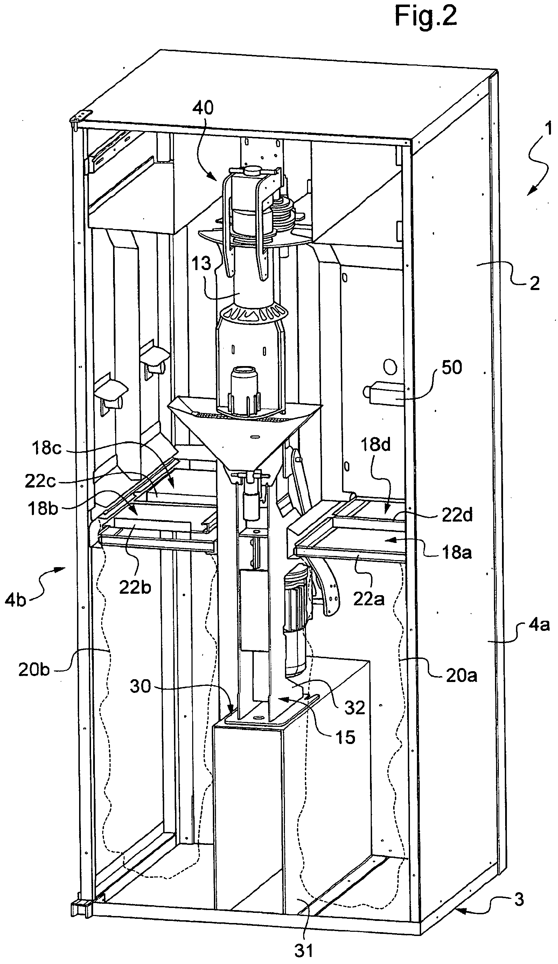

La figure 2 illustre l'intérieur de la machine 1 dont la face avant 5 a été ôtée. La machine 1 comporte un élévateur 15 et un trieur 40 de déchets situés à égale distance des parois latérales 4a et 4b en séparant le volume du bâti 2 en deux parties. De part et d'autre de l'élévateur 15 et du trieur 40 sont disposés les moyens de stockage qui occupent la majeure partie du volume du bati.

Selon un agencement particulier, les moyens de stockage comportent ainsi quatre emplacements 18a, 18b, 18c et 18d pouvant recevoir chacun un conteneur 20a, 20b, 20c, 20d, ici des sacs poubelle symbolisés en pointillés. Les conteneurs 20a, 20b, 20c sont destinés à recevoir chacun un type particulier de déchet à stocker : canette métallique, bouteille plastique ou gobelet plastique. Le quatrième conteneur 20d (qui s'étend derrière le conteneur 20a) est ici un conteneur tampon destiné à recevoir les déchets dont le conteneur correspondant est déjà plein. Par exemple, lorsque la machine 1 est placée à côté d'un distributeur de boissons chaudes servies dans des gobelets, le conteneur 20c (qui s'étend derrière le conteneur 20b) destiné aux gobelets se remplira plus vite que les autres conteneurs. Lorsque le conteneur de gobelets 20c sera plein, la machine déposera alors les gobelets dans le conteneur tampon 20d.

Les conteneurs 20a...20d sont fermés par des trappes escamotables 22a à 22d (seules deux trappes sont représentées en position fermée sur la partie gauche de la figure 2) articulées sur les parois latérales 4a et 4b et permettant de séparer les conteneurs 20a...20d de volumes de stockage temporaires 23a...23d situés au-dessus des conteneurs 20a...20d. Les volumes de stockage temporaires 23a...23d sont délimités par des parois de séparation situées de chaque côté de l'élévateur et agencées pour réaliser quatre volumes de stockage temporaires 23a...23d s'étendant à l'aplomb des conteneurs. Ainsi, lorsqu'un conteneur 20 est plein, la trappe 22 correspondante se ferme et isole le conteneur 20. Il est ainsi possible de vider le conteneur 20 plein, mais non débordant de déchets, par exemple via des ouvertures pratiquées dans les panneaux latéraux ou dans le panneau arrière, ou plus simplement en ouvrant la face avant 5. Une fois le conteneur 20 plein et la trappe 22 correspondante fermée, les déchets s'accumulent dans le conteneur tampon 20d ou dans le volume de stockage temporaire 23 associé, par-dessus la trappe correspondante, afin de ne pas saturer le conteneur 20 déjà plein.

Les trappes 22a...22d sont retenues verticalement par des électroaimants situés sur les parois latérales 4a et 4b. Lorsqu'un conteneur 20 est plein, on cesse d'alimenter l'électroaimant correspondant et la trappe 22 tombe. Une fois le conteneur 20 vidé et remis en place, la trappe 22 est relevée manuellement et les électroaimants sont alimentés. Ainsi, les déchets stockés dans le volume de stockage temporaire à l'aplomb du conteneur vidé tombent de nouveau dans conteneur.

La figure 2a illustre de façon schématique l'agencement des conteneurs, des trappes et zones de stockage temporaires.

Les moyens de stockage comportent en outre des capteurs, tels des capteurs de masse, permettant de contrôler le remplissage des conteneurs 20.

Les conteneurs 20 et les zones de stockage temporaire 23 sont agencés pour être plus hauts que larges afin d'offrir une surface au sol la plus faible possible. Compte tenu de cette disposition, l'élévateur 15 doit amener les déchets depuis la hauteur de l'ouverture jusqu'au trieur 40 situé au dessus des volumes de stockage temporaire 23, donc à une hauteur importante, supérieure à la hauteur cumulée des conteneurs 20 et des volumes de stockage temporaire 23.

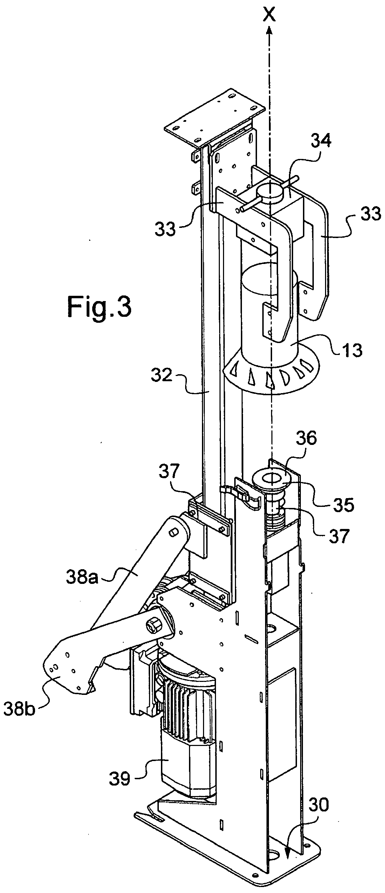

Ainsi, comme illustré par les figures 2 et 3, l'élévateur 15 comporte une partie fixe comprenant un socle 30 qui repose sur une rehausse 31 fixée sur la base 3 de la machine 1, le socle 30 ayant deux flans qui s'étendent pour tenir une colonne 32 fixée au socle 30 et qui s'étend sensiblement jusqu'au sommet du dispositif. La colonne 32 est terminée par des pattes de fixation 33 qui soutiennent un guide 13 cylindrique creux muni d'un cône d'entrée dont la base est dirigée vers le bas.

L'élévateur 15 comporte également une partie mobile comprenant une plateforme 36 fixée sur un coulisseau 37 monté pour coulisser le long de la tige 32. La plateforme 36 comporte un disque 35 sur lequel vient reposer le déchet introduit par l'utilisateur dans le dispositif. Le coulisseau 37 est animé d'un mouvement de translation verticale réversible grâce à un système de bielle-manivelle 38a/38b actionné par un moteur électrique 39 fixé au socle 30.

La machine 1 comporte également une butée 34 disposée sur les pattes de fixation 33 et permettant à l'élévateur 15 de compacter le déchet en l'écrasant sur la butée 34. Ainsi le volume du déchet est réduit ce qui permet d'augmenter le nombre de déchets stockables par la machine 1.

La plateforme 36, le guide 13 et la butée 34 sont alignés de sorte qu'un déchet posé sur la plateforme 36 est déplacé à travers le guide 13 pour venir s'écraser sur la butée 34.

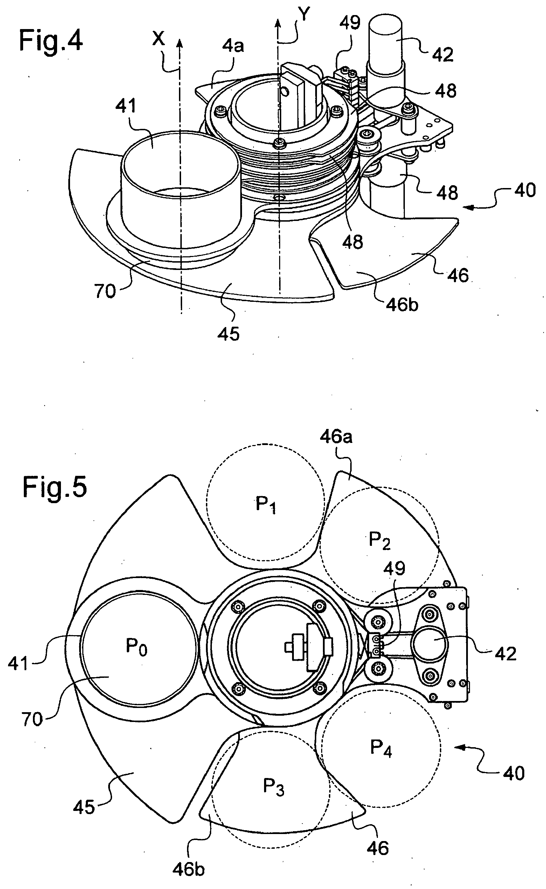

Le trieur 40 va maintenant être détaillé en relation avec les figures 4 et 5.

Le trieur 40 permet de déplacer sélectivement les déchets amenés par l'élévateur 15 à l'aplomb du conteneur 20a...20d approprié. A cet effet, Le trieur 40 comporte un réceptacle 41 mobile d'un diamètre supérieur au diamètre d'un déchet. Dans la position d'attente, le centre du réceptacle 41 est aligné avec l'axe X de coulissement de la plateforme 36 de sorte que le déchet porté par celle-ci puisse y pénétrer et y tenir entièrement.

Le trieur 40 comporte également un plateau de transfert 45 fixe et horizontal globalement en forme de secteur disposé sous le réceptacle 41. Le plateau de transfert 45 est percé d'un orifice 70 permettant le passage du déchet et de la plateforme 36 au travers du plateau de transfert 45.

Le réceptacle 41 est monté pour pivoter, parallèlement au plateau fixe, autour d'un axe Y vertical grâce à un moteur 42, qui permet au réceptacle 41 de prendre cinq positions distinctes représentées en pointillé sur la figure 5 : la position P0 correspond à la position de réception des déchets amenés par la plateforme 36. Les positions P1 à P4 correspondent chacune à une position surplombant l'un des conteneurs.

Le trieur 40 comporte également un plateau mobile 46 pivotant parallèlement au plateau de transfert 45 autour de l'axe Y, grâce à un moteur de plateau 47, entre deux positions. Le plateau mobile 46 est disposé sous le plateau de transfert 45 de sorte à prolonger les extrémités de ce dernier: Le plateau mobile 46 forme une première palette 46a et une seconde palette 46b s'étendant de chaque côté du trieur 40 et qui permettent de prolonger le plateau fixe 45 pour amener les déchets vers la position P2 ou P4, c'est-à-dire vers les conteneurs disposés contre la face arrière de la machine 1. Les palettes 46a et 46b sont agencées de sorte que dans une première position du plateau mobile 46, la première palette 46a s'étend en regard de la position P2 et la seconde palette 46b s'étend en regard de la position P3. Dans une seconde position du plateau mobile, la première palette 46a s'étend en regard de la position P1 tandis que la seconde palette 46b s'étend en regard de la position P4.

Ainsi, pour déposer un déchet dans le conteneur 20d correspondant à la position P4, le plateau mobile 46 doit être positionné en première position et le réceptacle 41 doit se déplacer en P4. Pour cela, la plateforme 36 de l'élévateur 15 amène le déchet en position P0 à hauteur du plateau de transfert 45, le déchet entrant dans le réceptacle 41. Celui-ci est alors déplacé et il entraine le déchet qui glisse sur le plateau de transfert 45. Ce dernier glisse sur la palette 46b du plateau mobile 46 et continue à être entraîné par le réceptacle 41 jusqu'à la position P4 où il tombe dans le conteneur 20d. Bien évidement, le même procédé est utilisé pour faire tomber le déchet dans l'un ou l'autre des autres conteneurs.

Le trieur 40 comporte également des moyens permettant de contrôler la position du réceptacle 41 et du plateau mobile 46. A cet effet, le réceptacle 41 est relié à cinq cames 48 correspondant chacune à une position P0 à P4, le plateau mobile 46 étant relié à une sixième came 48. Les six cames 48 activent chacune un contacteur 49. Ainsi, en fonction de l'activation des contacteurs 49, il est possible de contrôler la position du réceptacle 41 et du plateau mobile 46.

Le trieur 40 est agencé dans la machine 1 entre le guide 13 à l'intérieur duquel la plateforme 36 se déplace, et la butée 34. Pour compacter le déchet, la plateforme 36 traverse le plateau de transfert 45 et le réceptacle 41 jusqu'à écraser le déchet sur la butée 34. Après compactage du déchet, la plateforme 36 descend dans une position pour laquelle le disque 35 vient affleurer le plateau de transfert 45.

La machine de l'invention comporte des moyens de reconnaissance des déchets comprenant une caméra CCD 50 (figure 2) dont les images sont analysées par un programme de reconnaissance des formes permettant de distinguer les déchets pouvant être recyclés et les déchets ne pouvant pas être recyclés. Ainsi, il est prévu de pouvoir distinguer les cannettes, les bouteilles et les gobelets et de pouvoir refuser le traitement de déchets non recyclables (nourriture, emballages...) par la machine 1. La caméra 50 est de préférence placée dans un plan comprenant l'axe X afin d'offrir une vue latérale des déchets.

Le programme de reconnaissance de forme comporte une base de données recensant les types de déchets admissibles dans le dispositif ainsi que le poids moyen associé à chaque déchet. Par exemple, la reconnaissance de forme pourra se faire en estimant pour chaque récipient un ratio entre une hauteur totale du déchet et un diamètre extérieur de celui-ci.

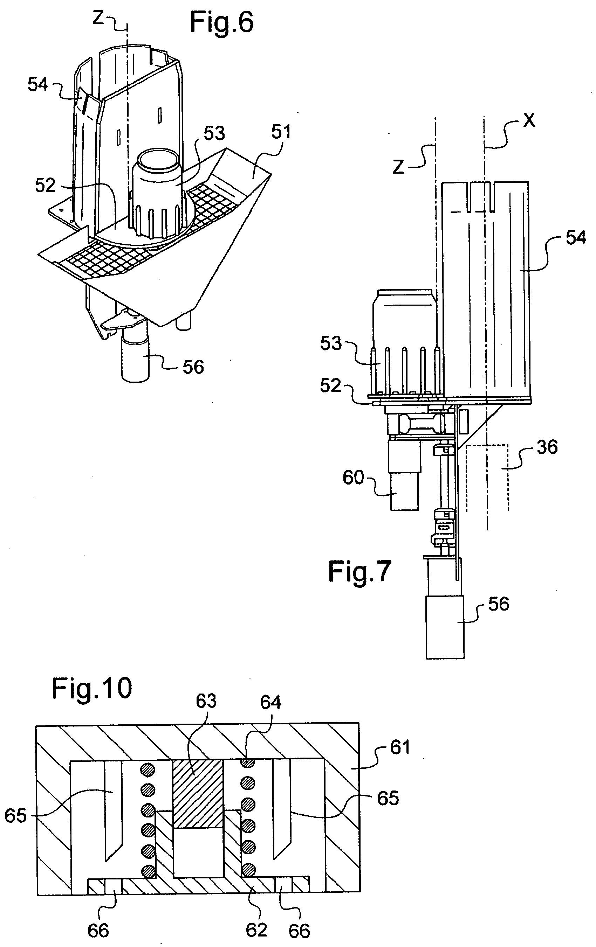

Les figures 6 et 7 illustrent plus particulièrement la zone d'introduction des déchets 8. Celle-ci comporte un déversoir à liquide 51, fixe et accessible depuis l'ouverture 7 pratiquée dans la face avant 5 de la machine 1. Le déversoir à liquide 51 est destiné à recevoir le contenu liquides des déchets. Les liquides collectés se déversent dans un réservoir étanche situé par exemple dans la rehausse 31 ou dans un conduit d'évacuation. Le déversoir 51 permet à l'utilisateur de vider le liquide contenu dans le déchet avant sa collecte pour éviter de polluer le conteneur à déchet.

Le déchet est déposé par l'utilisateur sur un support à déchet 53 disposé dans la zone d'introduction 8 et accessible depuis l'ouverture 7. Le support à déchets 53 est solidaire d'un carousel 52 monté pivotant selon un axe vertical Z par rapport au socle 30 et qui peut être actionné grâce à un moteur de carrousel 56. Après introduction d'un déchet et reconnaissance de celui-ci, le carrousel 52 pivote d'un demi-tour pour amener le déchet en regard de la plateforme 36, qui est en position basse. Une ouverture (non visible) pratiquée dans le support de déchet 53 permet le passage de la plateforme 36 et du coulisseau 37 au travers du support de déchet pour amener le déchet vers le trieur 40.

Le carrousel 52 comporte également un carter de protection 54 qui s'étend de façon diamétralement opposée au support à déchet 53. Lorsque le carrousel a pivoté pour amener le déchet en regard de la plateforme 36, le carter de protection 54 vient remplacer le support à déchet dans la zone d'introduction pour condamner l'accès à la machine pour l'utilisateur.

Une fois le déchet pris en charge par le tireur 40, la plateforme 36 revient dans sa position basse et le carrousel 52 pivote pour présenter à nouveau le support à déchet 53 dans la zone d'introduction 8.

La machine comporte également un automate de commande des moteurs, et un ordinateur. Ces moyens de commande permettent de commander les moteurs, de traiter les informations en provenance des différents capteurs, contiennent et exécutent le programme de reconnaissance de forme et assurent le fonctionnement de la machine 1.

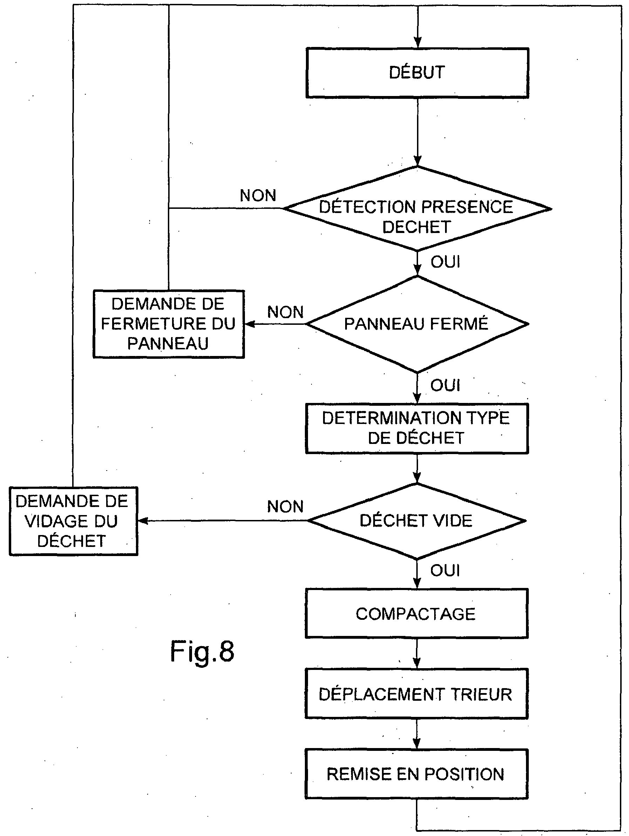

La figure 8 illustre un logigramme de fonctionnement de la machine 1 qui est mis en oeuvre de la manière suivante : l'utilisateur ouvre la trappe coulissante située sur la face avant 5 et dépose un déchet telle une canette métallique dans le support à déchet 53 puis referme la trappe coulissante. La machine 1 analyse alors le déchet. La caméra 50 prend des images de déchet et le programme de reconnaissance de forme détermine le type de déchet présent par reconnaissance de la forme en comparaison avec une base de données des déchets recyclables. Si le déchet n'est pas répertorié dans la base de données un message sur l'écran 9 indique à l'utilisateur de retirer le déchet. Si le déchet est connu de la base de donnée, la machine détermine dans quel conteneur il sera stocké (voir description du fonctionnement de la zone de stockage ci-dessous).

Une balance intégrée au carrousel 52 mesure la masse du déchet et la compare avec la masse du déchet vide tel que défini dans la base de données des déchets pour en déduire si le déchet contient encore du liquide ou non.

Si le déchet n'est pas vide, un message diffusé sur l'écran 9 invite l'utilisateur à vider le déchet dans le déversoir à liquide 51. Si le déchet est vide, le carrousel 52 pivote d'un demi-tour pour amener le déchet dans l'axe de la plateforme 36.

Les moyens de commande actionnent alors le moteur 39 du dispositif de l'élévateur 15 afin de faire monter la plateforme 36. Le déchet est entrainé avec la plateforme 36 et s'engage dans le guide 13 grâce au cône qui permet de maintenir le déchet vertical. En fin de course de la plateforme 36, le déchet est écrasé sur la butée 34.

La plateforme 36 redescend au niveau du plateau de transfert 45 pour que le disque 35 vienne affleurer celui-ci. Le réceptacle 41 et le plateau mobile 46 se déplacent alors pour amener le déchet au dessus du conteneur 20a...20d correspondant.

La plateforme 36 redescend, le réceptacle 41 reprend sa position initiale et le carrousel 52 est pivoté pour présenter le support à déchet 53 dans la zone d'introduction 8.

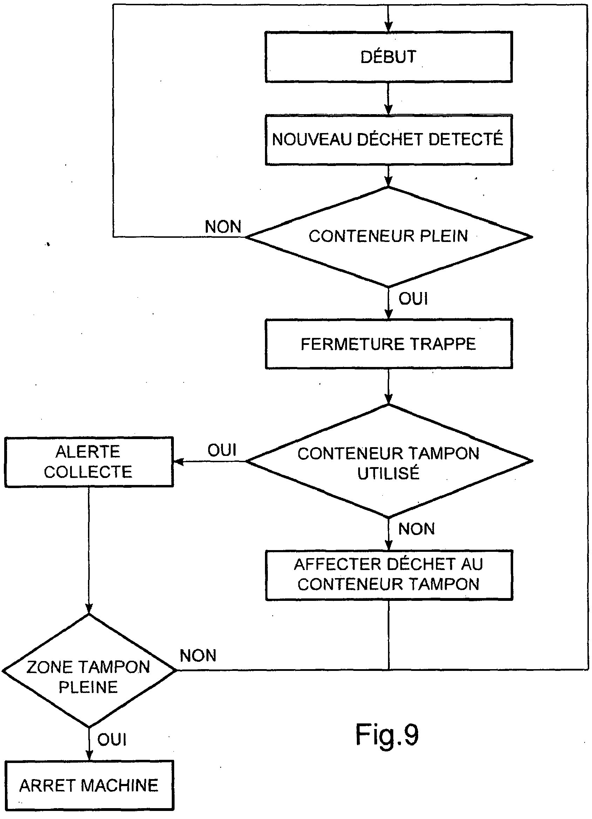

La figure 9 illustre un logigramme de fonctionnement de la zone de stockage des déchets et en particulier la gestion des conteneurs 20 lorsque l'un d'eux est plein.

Le remplissage des conteneurs est contrôlé en permanence de sorte que lorsqu'un conteneur est plein, la trappe 22 correspondante est fermée. Les déchets suivants seront déversés dans le conteneur tampon 21 tandis que la machine 1 émet une alerte de maintenance afin de signaler que l'un des conteneurs est plein.

Si un nouveau conteneur venait à être plein également, le conteneur tampon étant déjà utilisé, le dispositif ferme la trappe 22 du conteneur correspondant et les déchets sont alors stockés dans le volume de stockage temporaire 23 correspondant au conteneur.

Si au moins un des volumes de stockage temporaire 23 devait être rempli, la machine 1 s'arrête afin d'éviter un débordement des déchets.

Bien entendu, l'invention n'est pas limitée aux agencements et aux fonctions décrites précédemment.

En particulier, la machine peut comporter plus ou moins de quatre conteneurs. Le trieur 40 sera alors adapté pour comporter autant de positions que de conteneurs.

L'utilisation d'une caméra 50 pour la reconnaissance de forme des déchets est particulièrement avantageuse, car ce moyen de tri des déchets permet d'écarter les déchets non recyclables. Les moyens de tri peuvent également comporter un lecteur de code-barres permettant d'identifier la nature de l'emballage. Ainsi, il est possible de distinguer une canette de cola d'une autre boisson gazeuse bien que les formes des canettes soient identiques. Il est alors possible de déterminer le taux de recyclage pour un produit ou une marque donnée. Le lecteur de code-barres est avantageusement associé à un dispositif de rotation 60 (figures 6 et 7) équipant le support de déchets 53 du carrousel 52, permettant de faire tourner le déchet sur lui-même. Ainsi, il est possible de scanner toute la surface du déchet afin de détecter le code-barres.

Le déplacement de la plateforme 36 est ici assuré par un système bielle-manivelle actionnant un coulisseau 37. D'autres moyens ascensionnels peuvent être envisagés comme des vérins hydrauliques, pneumatiques ou électriques ou des systèmes à vis supportant directement la plateforme 36.

De même, le trieur 40 utilise un système de cames 48 et de contacteur 49 pour contrôler la position du réceptacle 41 et du plateau mobile 46. D'autres systèmes de contrôle peuvent être envisagés comme des moteurs pas-à-pas entrainant le réceptacle 41 et le plateau mobile 46 ou encore des codeurs de position.

Selon une variante de réalisation de la butée 34 illustrée en figure 10, la butée 34 comporte un carter annulaire rigide 61. La butée 34 comporte également une enclume 62, mobile qui coulisse sur un guide 63 à l'encontre d'un ressort d'éjection 64 maintenant l'enclume éloignée du fond du carter 61.

La butée 34 comporte en outre des pointes 65 destinées à percer le déchet pour éviter son éclatement lors du compactage. L'enclume 62 est agencée pour permettre aux pointes 65 de la traverser grâce à des orifices 66 ménagés dans l'enclume 62 au droit des pointes 65.

Ainsi, lorsque la plateforme 36 vient écraser le déchet sur la butée 34, l'enclume 62 se déplace vers le fond de la butée 34 et laisse apparaitre les pointes 65. En continuant sa course, la plateforme 36 écrase le déchet contre l'enclume 62 arrivée en butée et permet aux pointes 35 de percer le déchet. Puis, la plateforme 36 redescend jusqu'au niveau du plateau et le ressort d'éjection 64 pousse l'enclume 62 afin de désolidariser le déchet des pointes 65. Le déchet tombe alors dans le réceptacle 41 qui peut ainsi déplacer le déchet jusqu'au conteneur 20 approprié. Le perçage permet d'accepter des bouteilles fermées par un bouchon. En outre, la forme de la butée et de la plateforme sont prévues pour provoquer une déformation plastique et permanente des déchets, sans retour élastique d'amplitude, de sorte que le déchet reste compacté.

Alternativement, la butée 34 peut être directement solidaire du réceptacle 41 sous la forme d'un simple fond rigide.

Les capteurs des moyens de stockage peuvent être remplacés avantageusement par un comptage des déchets. En établissant préalablement le volume de chaque type de déchet et en comptant les déchets stockés, il est ainsi possible de déterminer quand un conteneur est rempli.

Le principe d'un recyclage écologique implique que la collecte des déchets doit être réalisée le moins souvent possible pour réduire au minimum les émissions de CO2 liées au transport. Dans ce but, il est particulièrement intéressant de doter le dispositif de moyens de communication permettant d'alerter un opérateur du remplissage des conteneurs. Ainsi, l'opérateur ne se déplace que si le ou les conteneurs sont pleins.

A cet effet, le dispositif comporte des moyens de communication filaires ou non. Le dispositif peut ainsi être relié à un réseau informatique par une connexion par ondes telle que Wi-Fi, GPRS...

Ces moyens de communication à distance peuvent également servir pour une maintenance à distance et pour permettre au dispositif de générer des alertes de dysfonctionnement.

## Revendications

1. Machine (1) de collecte et de tri de déchets comprenant un bâti (2) avec une base (3) reposant sur le sol et une face avant (5) dans laquelle est pratiquée une ouverture (7) permettant d'accéder à une zone d'introduction des déchets (8), la machine (1) comportant en outre à l'intérieur du bâti (2), des moyens de reconnaissance des déchets (50), un trieur (40) de déchets et des moyens de stockage des déchets triés comprenant au moins deux conteneurs (20a..20d),
- la machine (1) comportant un élévateur (15) pour transporter un déchet introduit dans la zone d'introduction (8) vers le trieur (40) disposé à l'aplomb de la zone d'introduction (8), et
- le trieur de déchets (40) étant agencé pour déplacer le déchet transporté à l'aplomb d'un conteneur (20a..20d) choisi en fonction d'une information fournie par les moyens de reconnaissance des déchets (50) et dans lequel le déchet est reçu, **caractérisé en ce que** :
le trieur (40) comporte un plateau de transfert (45) fixe, comprenant un orifice (70) permettant à la plateforme (36) d'amener le déchet à hauteur du plateau de transfert (45) dans une première position (P0), et des moyens de déplacement (41) pour déplacer le déchet sur le plateau de transfert (45) entre la première position (P0) et au moins deux positions distinctes dans lesquelles le déchet est amené au-delà d'une extrémité du plateau de transfert (45) à l'aplomb du conteneur (20a..20d) correspondant.

2. Machine (1) selon la revendication 1, dans laquelle l'élévateur (15) comporte :
- une plateforme (36) se déplaçant entre une position basse et une position haute et agencée pour accueillir en position basse les déchets depuis la zone d'introduction (8) et pour amener les déchets dans le trieur (40) en position haute,
- des moyens de déplacement (38, 39) pour déplacer la plateforme (36) entre la position basse et la position haute.

3. Machine (1) selon la revendication 2, comportant un support à déchet (53) mobile destiné à recevoir un déchet, et des moyens (52, 56) de déplacement du support à déchet (53) entre une première position dans laquelle le support à déchet (53) est disposé dans la zone d'introduction (8) à proximité de l'ouverture (7) pour recevoir un déchet introduit par un utilisateur, et une seconde position permettant à la plateforme (36) d'appréhender le déchet contenu dans le support à déchet (53).

4. Machine (1) selon la revendication 3 dans laquelle les moyens de déplacement (52, 56) du support à déchet (53) comprennent un carrousel (52) monté pivotant selon un axe vertical (Z), et portant un carter de protection (54), le carrousel (52) étant agencé pour que le carter de protection (54) obstrue la zone d'introduction (8) lorsque le support à déchet (53) est dans la seconde position.

5. Machine (1) selon la revendication 1 dans laquelle la zone d'introduction (8) des déchets comporte un receveur de liquide (51).

6. Machine (1) selon la revendication 1, dans laquelle la zone d'introduction (8) des déchets comporte des moyens pour vérifier que les déchets sont vides.

7. Machine (1) selon la revendication 1, dans laquelle les moyens (52, 56) de déplacement du support à déchet (53) comportent un réceptacle (41), monté pivotant parallèlement au plateau de transfert (45) et venant entourer le déchet pour le déplacer sur le plateau de transfert (45).

8. Machine (1) selon la revendication 7, dans laquelle le trieur (40) comporte un plateau mobile (46) horizontal pivotant parallèlement au plateau de transfert (45), le plateau mobile (46) se déplaçant entre une première position dans laquelle le plateau mobile (46) vient prolonger une extrémité du plateau de transfert (45) pour prolonger le plateau de transfert (45) et permettre le déplacement du déchet sur le plateau mobile (46) et une deuxième position dans laquelle le plateau mobile (46) est écarté de l'extrémité du plateau de transfert (45).

9. Machine (1) selon la revendication 2, comportant une butée (34) disposée au dessus du trieur (40) contre laquelle la plateforme (36) écrase le déchet.

10. Machine (1) selon la revendication 9, dans laquelle la butée (34) comporte des moyens pour percer les déchets (65) et pour les éjecter de la butée (62, 64).

11. Machine (1) selon la revendication 7, dans laquelle le réceptacle (41) comporte une butée de fond sur laquelle la plateforme (36) écrase le déchet.

12. Machine selon la revendication 1, dans laquelle les moyens de stockage des déchets comprennent des trappes (22a...22d) pour fermer chaque conteneur (20a..20d) et séparant chaque conteneur (20a...20d) d'une zone tampon (23a...23d) située au-dessus de la trappe (22a...22d).

13. Machine (1) selon la revendication 1, dans laquelle les moyens de stockage des déchets comprennent au moins un conteneur tampon (20d) permettant le stockage des déchets lorsqu'au moins un autre conteneur (20a...20c) est plein.

14. Machine (1) selon la revendication 1 dans laquelle les moyens de reconnaissance des déchets (50) comprennent une camera couplée à un programme de reconnaissance de forme.

15. Machine (1) selon la revendication 14 dans laquelle pour reconnaître le déchet, le programme de reconnaissance de forme estime un ratio entre une hauteur du déchet et un diamètre de celui-ci.

16. Machine (1) selon la revendication 1, dans laquelle les moyens de reconnaissance des déchets (50) comprennent un lecteur de code-barres.

## Patentansprüche

1. Maschine (1) zum Sammeln und Sortieren von Abfallprodukten, umfassend ein Gehäuse (2) mit einer Basis (3), die auf dem Boden steht, und einer Vorderseite (5), in der eine Öffnung (7) hergestellt ist, die einen Zugriff auf eine Einführzone (8) zum Einführen von Abfallprodukten ermöglicht, wobei die Maschine (1) im Inneren des Gehäuses (2) ferner Abfallprodukterkennungsmittel (50), einen Abfallproduktsortierer (40) sowie mindestens zwei Behälter (20a...20d) umfassende Lagermittel zum Lagern der sortierten Abfallprodukte umfasst,
- wobei die Maschine (1) einen Höhenförderer (15) umfasst, um ein in die Einführzone (8) eingeführtes Abfallprodukt zu dem Sortierer (40) zu transportieren, der senkrecht über der Einführzone (8) angeordnet ist, und
- wobei der Abfallproduktsortierer (40) so ausgebildet ist, dass er das transportierte Abfallprodukt senkrecht über einen Behälter (20a..20d) verschiebt, der in Abhängigkeit von einer von den Abfallprodukterkennungsmitteln (50) gelieferten Information ausgewählt und in dem das Abfallprodukt aufgenommen wird, **dadurch gekennzeichnet, dass** der Sortierer (40) eine ortsfeste Übergabeplatte (45) mit einer Öffnung (70) umfasst, die der Plattform (36) gestattet, das Abfallprodukt auf die Höhe der Übergabeplatte (45) in einer ersten Position (P0) zu befördern, sowie Verschiebungsmittel (41) zum Verschieben des Abfallproduktes auf der Übergabeplatte (45) zwischen der ersten Position (P0) und mindestens zwei zueinander verschiedenen Positionen, in denen das Abfallprodukt über ein Ende der Übergabeplatte (45) hinaus senkrecht über den entsprechenden Behälter (20a..20d) befördert ist.

2. Maschine (1) nach Anspruch 1, wobei der Höhenförderer (15) umfasst:
- eine sich zwischen einer unteren Position und einer oberen Position verschiebende Plattform (36), die so ausgebildet ist, dass sie in der unteren Position die Abfallprodukte aus der Einführzone (8) aufnimmt und in der oberen Position die Abfallprodukte in den Sortierer (40) befördert,
- Verschiebungsmittel (38, 39) zum Verschieben der Plattform (36) zwischen der unteren Position und der oberen Position.

3. Maschine (1) nach Anspruch 2, umfassend einen beweglichen Abfallproduktträger (53), der dazu bestimmt ist, ein Abfallprodukt aufzunehmen, sowie Verschiebungsmittel (52, 56) zum Verschieben des Abfallproduktträgers (53) zwischen einer ersten Position, in der der Abfallproduktträger (53) in der Einführzone (8) nahe der Öffnung (7) angeordnet ist, um ein von einem Nutzer eingeführtes Abfallprodukt aufzunehmen, und einer zweiten Position, die es der Plattform (36) ermöglicht, das in dem Abfallproduktträger (53) enthaltene Abfallprodukt zu fassen.

4. Maschine (1) nach Anspruch 3, wobei die Verschiebungsmittel (52, 56) zum Verschieben des Abfallproduktträgers (53) einen Kreisförderer (52) umfassen, der um eine vertikale Achse (Z) drehbar gelagert ist und ein Schutzgehäuse (54) trägt, wobei der Kreisförderer (52) so ausgebildet ist, dass das Schutzgehäuse (54) die Einführzone versperrt, wenn der Abfallproduktträger (53) in der zweiten Position ist.

5. Maschine (1) nach Anspruch 1, wobei die Einführzone (8) für Abfallprodukte eine Flüssigkeitsauffangwanne (51) umfasst.

6. Maschine (1) nach Anspruch 1, wobei die Einführzone (8) für Abfallprodukte Mittel umfasst, um zu verifizieren, dass die Abfallprodukte leer sind.

7. Maschine (1) nach Anspruch 1, wobei die Verschiebungsmittel (52, 56) zum Verschieben des Abfallproduktträgers (53) einen Aufnahmebehälter (41) umfassen, der parallel zur Übergabeplatte (45) drehbar gelagert ist und das Abfallprodukt umgeben wird, um es auf der Übergabeplatte (45) zu verschieben.

8. Maschine (1) nach Anspruch 7, wobei der Sortierer (40) eine horizontale bewegliche Platte (46) umfasst, die sich parallel zur Übergabeplatte (45) dreht, wobei sich die bewegliche Platte (46) zwischen einer ersten Position, in der die bewegliche Platte (46) ein Ende der Übergabeplatte (45) verlängern wird, um die Übergabeplatte zu verlängern und das Verschieben des Abfallproduktes auf der beweglichen Platte (46) zu gestatten, und einer zweiten Position verschieben wird, in der die bewegliche Platte (46) von dem Ende der Übergabeplatte (45) beabstandet ist.

9. Maschine (1) nach Anspruch 2, umfassend einen über dem Sortierer (40) angeordneten Anschlag (34), an dem die Plattform (36) das Abfallprodukt zerdrückt.

10. Maschine (1) nach Anspruch 9, wobei der Anschlag (34) Mittel umfasst, um die Abfallprodukte (65) zu durchstechen und sie von dem Anschlag (62, 64) auszustoßen.

11. Maschine (1) nach Anspruch 7, wobei der Aufnahmebehälter (41) einen Bodenanschlag umfasst, an dem die Plattform (36) das Abfallprodukt zerdrückt.

12. Maschine nach Anspruch 1, wobei die Abfallproduktlagermittel Klappen (22a..22d) umfassen, um jeden Behälter (20a..20d) zu verschließen und jeden Behälter (20a...20d) von einer Pufferzone (23a...23d) zu trennen, die sich über der Klappe (22a...22d) befindet.

13. Maschine (1) nach Anspruch 1, wobei die Abfallproduktlagermittel mindestens einen Pufferbehälter (20d) umfassen, der die Lagerung der Abfallprodukte ermöglicht, wenn mindestens ein anderer Behälter (20a...20c) voll ist.

14. Maschine (1) nach Anspruch 1, wobei die Abfallprodukterkennungsmittel (50) eine Kamera umfassen, die an ein Formerkennungsprogramm angeschlossen ist.

15. Maschine (1) nach Anspruch 14, wobei das Formerkennungsprogramm zur Erkennung des Abfallprodukts ein Verhältnis zwischen einer Höhe des Abfallprodukts und einem Durchmesser desselben schätzt.

16. Maschine (1) nach Anspruch 1, wobei die Abfallprodukterkennungsmittel (50) einen Strichcodeleser umfassen.

## Claims

1. A machine for collecting and sorting waste, the machine comprising a structure (2) with a base (3) resting on the floor and a front face (5) having an opening (7) formed therein giving access to a wasteintroduction zone (8), the machine (1) further including, inside the structure (2), waste-recognition means (50), a waste sorter (40), and storage means (20, 23) for storing sorted waste and comprising at least two containers (20a, ..., 20d), an elevator (15) for transporting waste introduced into the introduction zone towards the sorter (40) that is arranged vertically above the introduction zone (8); and
• the waste sorter (40) beingarranged to move the transported waste to vertically above a container (20a, ..., 20d) selected as a function of information delivered by the waste-recognition means (50) and in which the waste is received, the machine being **characterized in that** the sorter (40) comprises a stationary transfer tray (45) having an orifice (70) enabling the elevator (15) to bring the waste up to the height of the transfer tray (45) in a first position (P0), and movement means (41) for moving the waste on the transfer tray (45) between the first position (P0) and at least two distinct positions in which the waste is taken beyond an end of the transfer tray (45) to vertically above the corresponding container (20a, ..., 20d).

2. A machine (1) according to claim 1, wherein the elevator (15) comprises:
· a platform (36) movable between a low position and a high position, and arranged in the low position to receive waste from the introduction zone (8) and in the high position to bring the waste into the sorter (40); and
· movement means (38, 39) for moving the platform (36) between the low position and the high position.

3. A machine (1) according to claim 2, including a movable waste support (53) for receiving waste, and movement means (52, 56) for moving the waste support (53) between a first position in which the waste support (53) is arranged in the introduction zone (8) close to the opening (7) in order to receive waste introduced by a user, and a second position enabling the platform (36) to take the waste contained in the waste support (53).

4. A machine (1) according to claim 3, wherein the waste support (53) movement means (52,56) comprise a carousel (52) mounted to pivot about a vertical axis (Z) and carrying a protective casing, the carousel (52) being arranged so that the protective casing (54) obstructs the introduction zone while the waste support (53) is in the second position.

5. A machine (1) according to claim 1, wherein the waste introduction zone (8) includes a liquid receiver (51).

6. A machine (1) according to claim 1, wherein the waste introduction zone (8) includes means for verifying that the waste is empty.

7. A machine (1) according to claim 1, wherein the waste support (53) movement means (52,56) comprise a receptacle (41) mounted to pivot parallel to the transfer tray (45) and surrounding the waste to move it on the transfer tray (45).

8. A machine (1) according to claim 8, wherein the sorter (40) includes a horizontal movable tray (46) that pivots parallel to the transfer tray (45), the movable tray (46) moving between a first position in which the movable tray (46) extends one end of the transfer tray (45) so as to extend the transfer tray (45) and enable waste to be moved on the movable tray (46), and a second position in which the movable tray (46) is spaced apart from the end of the transfer tray (45).

9. A machine (1) according to claim 2, including a stop (34) arranged above the sorter (40) and against which the platform (36) crushes the waste.

10. A machine (1) according to claim 10, wherein the stop (34) includes means (65) for piercing the waste and means (62, 64) for ejecting the waste from the stop.

11. A machine (1) according to claim 8, wherein the receptacle (41) includes an end wall stop against which the platform crushes the waste.

12. A machine (1) according to claim 1, wherein the waste storage means comprise hatches (22a, ..., 22d) for closing each container (20) and separating each container (20a, ..., 20d) from a buffer zone (23a, ..., 23d) situated above the hatch (22a, ..., 22d).

13. A machine (1) according to claim 1, wherein the waste storage means include at least one buffer container (20d) enabling waste to be stored when at least one other container (20a, ..., 20c) is full.

14. A machine (1) according to claim 1, wherein the waste-recognition means (50) comprise a camera coupled to a shape-recognition program.

15. A machine (1) according to claim 14, wherein, in order to recognize the waste, the shape-recognition program estimates a ratio between the height of the waste and its diameter.

16. A machine (1) according to claim 1, wherein the waste-recognition means comprise a bar code reader.
